# EUROPEAN PATENT SPECIFICATION

(11) **EP 4 170 143 B1**
(45) Date of publication and mention of the grant of the patent: **03.09.2025**
(21) Application number: 22202508.2
(22) Date of filing: 19.10.2022
(51) Int. Cl.: F02C 3/107, F02C 7/06, F02K 3/06

(54) **STRADDLE MOUNTED LOW PRESSURE COMPRESSOR**
IM GRÄTSCHSITZ MONTIERTER NIEDERDRUCKVERDICHTER
COMPRESSEUR BASSE PRESSION MONTÉ À CALIFOURCHON

(30) Priority: 19.10.2021 US 202117504869
(43) Date of publication of application: 26.04.2023
(73) Proprietor: RTX Corporation, Farmington, CT 06032 (US)
(72) Inventor: MULDOON, Marc J., Marlborough, 06447 (US)
(74) Representative: Dehns

(56) References cited:
- EP-A1- 0 203 881
- EP-A2- 1 918 527
- US-A1- 2013 192 200
- US-A1- 2014 186 158
- US-A1- 2015 065 285
- US-A1- 2016 084 105

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The gas turbine engine can include a high spool having a high pressure turbine driving a high pressure compressor and a low spool having a low pressure turbine driving a low pressure compressor and the fan section.

Prior art gas turbine engines comprising a gear reduction are disclosed in EP 0203881 A1, EP 1918527 A2, US 2014/186158, US 2016/084105 A1, US2013/192200 A1 and US2015/065285 A1.

### SUMMARY

In one aspect of the present invention, a gas turbine engine is provided according to claim 1.

In an embodiment, the first low spool support bearing is supported by an engine static structure located axially forward of the low pressure compressor.

In another embodiment according to any of the previous embodiments, the engine static structure is located axially forward of the low pressure compressor is a front center body.

In another embodiment according to any of the previous embodiments, the second low spool support bearing is supported by an engine static structure located axially aft of the low pressure compressor.

In another embodiment according to any of the previous embodiments, the engine static structure is located axially aft of the low pressure compressor is an intermediate case.

In another embodiment according to any of the previous embodiments, the intermediate case at least partially defines a portion of a core flow path through the gas turbine engine fluidly downstream of the low pressure compressor and fluidly upstream of the high pressure compressor.

In another embodiment according to any of the previous embodiments, the intermediate case includes at least one structural support strut spanning the core flow path.

In another embodiment according to any of the previous embodiments, an inner race of the first low spool support bearing is configured to rotate with the low spool. An outer race of the first low spool support bearing is fixed to the front center body. An inner race of the second low spool support bearing is configured to rotate with the low spool. An outer race of the second low spool support bearing is fixed to the intermediate case.

In another embodiment according to any of the previous embodiments, a mid-turbine frame is located axially between the high pressure turbine and the low pressure turbine and supports an axially aft end of the high spool.

In another embodiment according to any of the previous embodiments, a pair of low spool support bearings is located axially aft of the low pressure turbine. The low spool is unsupported by the mid-turbine frame.

In another embodiment according to any of the previous embodiments, an aft end of the high spool is supported by a bearing system engaging a diffuser case.

In another embodiment according to any of the previous embodiments, the fan section includes a fan drive shaft in driving engagement with the fan. A pair of fan shaft support bearing supports the fan drive shaft relative to the front center body. The carrier is in driving engagement with the fan drive shaft.

In another embodiment according to any of the previous embodiments, the low pressure compressor includes at least 4 stages and no more than 7 stages. The high pressure compressor includes more stages than the low pressure compressor.

In another embodiment according to any of the previous embodiments, the low pressure compressor includes at least 5 stages and no more than 7 stages. The high pressure compressor includes more stages than the low pressure compressor.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description, The drawings that accompany the detailed description can be briefly described as follows.
Figure 1 illustrates an example gas turbine engine.
Figure 2 illustrates an example planetary gear system.

### DETAILED DESCRIPTION

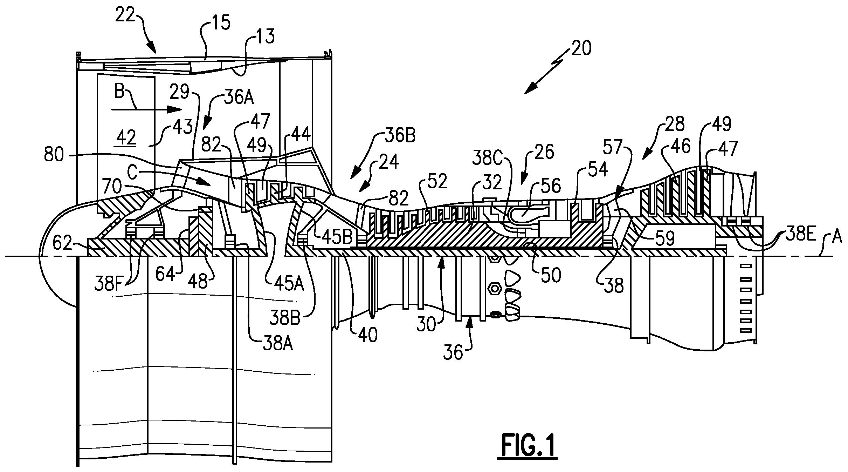

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a low pressure compressor 44 and a low pressure turbine 46. The inner shaft 40 is connected to the fan 42 through a speed change mechanism, which in accordance with the invention is a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Alternatively, the low pressure compressor 44 includes a forward hub 45A and an aft hub 45B driven by the inner shaft 40.

The high speed spool 32 includes an outer shaft 50 that interconnects a high pressure compressor 52 and a high pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. In the illustrated example, the mid-turbine frame 57 only includes a bearing system 38 that supports the high spool 50 and the mid-turbine frame 57 does not support the low speed spool 30. Additionally, a pair of bearing systems 38E are located adjacent a downstream end of the low speed spool 30 adjacent an exhaust outlet of the gas turbine engine to support the low speed spool 30. Furthermore, a bearing assembly 38C can be located radially inward from the combustor 56 and supported by a diffuser case and be used in place of or in addition to the bearing system 38 associated with the mid-turbine frame 57. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49. In one example, the low pressure compressor 44 includes at least 4 stages and no more than 7 stages and in another example, the low pressure compressor 44 includes at least 5 stages and no more than 7 stages. In both examples, the high pressure compressor 52 includes more stages than the low pressure compressor.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. With the planetary gear system, the ring gear is fixed from rotation relative to the engine static structure 36 and the carrier rotates with the fan 42. With the star gear system, the carrier is fixed from rotation relative to the engine static structure 36 and the ring gear rotates with the fan 42. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0 or 4.2. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters), The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5} (where °R = 9/5 x K). The corrected fan tip speed can be less than or equal to 1150.0 ft / second (350.5 meters/second), and can be greater than or equal to 1000.0 ft / second (304.8 meters/second).

As shown in Figure 1, the low speed spool 30 is supported by a number of bearing systems 38. In particular, an axially forward end of the low speed spool 30 adjacent the geared architecture 48 is supported by a first low spool support bearing 38A and a second low spool support bearing 38B. The first bearing 38A is located axially between the low pressure compressor 44 and the geared architecture 48. A location of attachment of the first bearing 38A with the low speed spool 30 is located axially upstream of a location of attachment of the low pressure compressor 44 to the low speed spool 30 and the location of engagement of the first bearing 38A is axially downstream of the geared architecture 48. Furthermore, a location of attachment of the second bearing 38B with the low speed spool 30 is located axially downstream of the location of attachment of the low pressure compressor 44 with low speed spool 30 and axially upstream of the high pressure compressor 52 and the high speed spool 32.

In this disclosure, axial and radial directions are in relation to the engine axis A unless stated otherwise. Additionally, axially upstream and downstream directions are in relation to a direction of flow of air through the core flow path C unless stated otherwise.

In the illustrated example, the first low spool support bearing 38A is supported by the engine static structure 36 located axially forward of the low pressure compressor 44. In the illustrated example, the first bearing 38A is supported by a front center body 36A of the engine static structure 36. An inner race of the first bearing 38A is configured to rotate with the low speed spool 30 and an outer race of the first bearing 38A is fixed relative to the front center body 36A. The front center body 36A provides structure support to a front of the gas turbine engine 20 forward of the low pressure compressor 44. The front center body 36A can include structural vanes and/or struts 80 that pass through the core flow path C upstream of the low pressure compressor 44.

In addition to supporting the first bearing 38A, the front center body 36A provides structural support for a pair of fan shaft support bearings 38F that support a fan drive shaft 62. The fan bearings 38F each include an inner race that is configured to rotate with the fan drive shaft 62 and an outer race fixed relative to the front center body 36A of the static structure 36. The fan drive shaft 62 is also in driving engagement with by an output of the geared architecture 48.

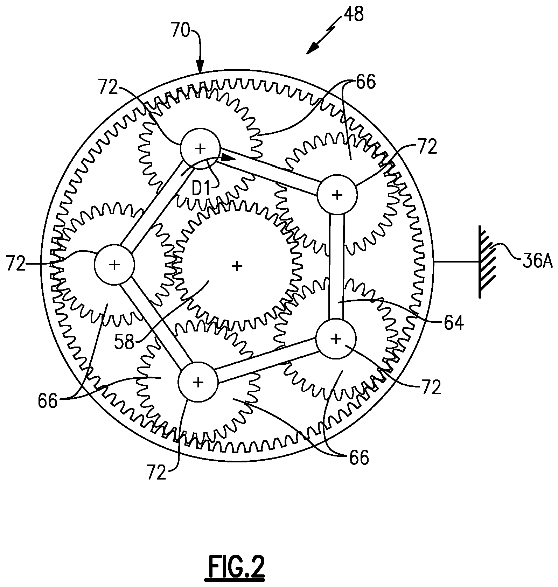

As shown in Figures 1-2, the geared architecture 48 provides an output through a carrier 64 that is configured to rotate with the fan drive shaft 62. The carrier 64 supports multiple planet gears 66 supported for rotation on bearings 72, such as journal bearings, relative to the carrier 64. The planet gears 66 also surround a sun gear 68 that is in driving engagement with the low pressure turbine 46 through the low speed spool 30. A ring gear 70 surrounds the planet gears 66 and is fixed from rotating relative to the front center body 36A of the engine static structure 36.

The second bearing 38B is supported by an intermediate case 36B of the engine static structure 36. The intermediate case is located axially aft of the low pressure compressor 44 and axially forward of the high pressure compressor 52 and the high speed spool 32. An inner race of the second bearing 38B is configured to rotate with the low speed spool 30 and an outer race of the second bearing 38B is fixed relative to the intermediate case 36B.

The intermediate case 36B at least partially define a boundary of the core flow path C fluidly downstream of the low pressure compressor 44 and upstream of the high pressure compressor 52. The intermediate case 36B also includes at least one structural support strut 82 radially spanning the core flow path C. The structure strut 80 can also be surrounded by an airfoil, such as an inlet guide vane, to turn air leaving the fan 42 and entering the core flow path C. A contour of the airfoil is determined based on a rotational direction of the fan 42 which determines a direction of movement of the air entering the core flow path C.

Although the different non-limiting examples are illustrated as having specific components, the examples of this disclosure are not limited to those particular combinations. It is possible to use some of the components or features from any of the non-limiting examples in combination with features or components from any of the other non-limiting examples.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of the following claims.

## Claims

1. A gas turbine engine (20) comprising:
a fan section (22) including a fan (42) with fan blades (43), wherein said fan section (22) drives air along a bypass flow path (B) in a bypass duct (13);
a gear reduction (48) in driving engagement with the fan (42), wherein the gear reduction (48) is a planetary gear system (48);
a low spool (30) including a low pressure turbine (46) driving a low pressure compressor (44) and driving the gear reduction (48) to drive the fan (42) at a speed slower than the low pressure turbine (46);
a high spool (32) including a high pressure turbine (54) driving a high pressure compressor (52); and
a second low spool support bearing (38B) located axially between the low pressure compressor (44) and the high pressure compressor (52),
wherein the planetary gear system (48) includes a ring gear (70) fixed from rotating relative to an engine static structure (36), a sun gear (68) in driving engagement with an input from the low spool (30), and a carrier (64) supporting multiple planet gears (66) surrounding the sun gear (68), the planet gears (66) supported for rotation on bearings (72) relative to the carrier (64), and wherein the planetary gear system (48) provides an output through the carrier (64) that is configured to rotate to drive the fan (42),
**characterized in that** it further comprises a first low spool support bearing (38A) located axially between the low pressure compressor (44) and the gear reduction (48).

2. The gas turbine engine (20) of claim 1, wherein the first low spool support bearing (38A) is supported by an engine static structure (36A) located axially forward of the low pressure compressor (44).

3. The gas turbine engine (20) of claim 2, wherein the engine static structure (36A) located axially forward of the low pressure compressor (44) is a front center body (36A).

4. The gas turbine engine (20) of claim 1, 2 or 3, wherein the second low spool support bearing (38B) is supported by an engine static structure (36B) located axially aft of the low pressure compressor (44).

5. The gas turbine engine (20) of claim 4, wherein the engine static structure (36B) located axially aft of the low pressure compressor (44) is an intermediate case (36B).

6. The gas turbine engine (20) of claim 5, wherein the intermediate case (36B) at least partially defines a portion of a core flow path (C) through the gas turbine engine (20) fluidly downstream of the low pressure compressor (44) and fluidly upstream of the high pressure compressor (52).

7. The gas turbine engine (20) of claim 6, wherein the intermediate case (36B) includes at least one structural support strut (82) spanning the core flow path (C).

8. The gas turbine engine (20) of any preceding claim, wherein an inner race of the first low spool support bearing (38A) is configured to rotate with the low spool (30), an outer race of the first low spool support bearing (38A) is fixed to a or the front center body (36A), an inner race of the second low spool support bearing (38B) is configured to rotate with the low spool (30), and an outer race of the second low spool support bearing (38B) is fixed to an or the intermediate case (36B).

9. The gas turbine engine (20) of any preceding claim, including a mid-turbine frame (57) located axially between the high pressure turbine (54) and the low pressure turbine (46) and supporting an axially aft end of the high spool (32).

10. The gas turbine engine (20) of claim 9, including a pair of low spool support bearings (38E) located axially aft of the low pressure turbine (46), wherein the low spool (30) is unsupported by the mid-turbine frame (57).

11. The gas turbine engine (20) of any preceding claim, wherein an or the aft end of the high spool (32) is supported by a bearing system (38C) engaging a diffuser case.

12. The gas turbine engine (20) of any preceding claim, wherein the fan section (22) includes a fan drive shaft (62) in driving engagement with the fan (42) and a pair of fan shaft support bearings (38F) supporting the fan drive shaft (62) relative to a or the front center body (36A), the carrier (64) in driving engagement with the fan drive shaft (62).

13. The gas turbine engine (20) of any preceding claim, wherein the low pressure compressor (44) includes at least 4 stages and no more than 7 stages and the high pressure compressor (52) includes more stages than the low pressure compressor.

14. The gas turbine engine (20) of any preceding claim, wherein the low pressure compressor (44) includes at least 5 stages and no more than 7 stages and the high pressure compressor (52) includes more stages than the low pressure compressor (44).

## Patentansprüche

1. Gasturbinentriebwerk (20), umfassend:
einen Fanabschnitt (22), der einen Fan (42) mit Fanschaufeln (43) beinhaltet, wobei der Fanabschnitt (22) Luft entlang eines Nebenstromwegs (B) in einem Nebenkanal (13) antreibt;
ein Untersetzungsgetriebe (48) in Antriebseingriff mit dem Fan (42), wobei das Untersetzungsgetriebe (48) ein Planetengetriebesystem (48) ist;
eine Nieder-Läufergruppe (30), die eine Niederdruckturbine (46) beinhaltet, die einen Niederdruckverdichter (44) antreibt und das Untersetzungsgetriebe (48) antreibt, um den Fan (42) mit einer langsameren Drehzahl als die Niederdruckturbine (46) anzutreiben;
eine Hoch-Läufergruppe (32), die eine Hochdruckturbine (54) beinhaltet, die einen Hochdruckverdichter (52) antreibt; und
ein zweites Nieder-Läufergruppenstützlager (38B), das axial zwischen dem Niederdruckverdichter (44) und dem Hochdruckverdichter (52) angeordnet ist,
wobei das Planetengetriebesystem (48) ein Hohlrad (70), das relativ zu einer statischen Triebwerksstruktur (36) drehfest angeordnet ist, ein Sonnenrad (68), das mit einem Eingang von der Nieder-Läufergruppe (30) in Antriebseingriff steht, und einen Träger (64) beinhaltet, der mehrere Planetenräder (66) stützt, die das Sonnenrad (68) umgeben, wobei die Planetenräder (66) auf Lagern (72) drehbar relativ zu dem Träger (64) gelagert sind, und wobei das Planetengetriebesystem (48) einen Ausgang über den Träger (64) bereitstellt, der dazu konfiguriert ist, sich zu drehen, um den Fan (42) anzutreiben,
**dadurch gekennzeichnet, dass** es ferner ein erstes Nieder-Läufergruppenstützlager (38A) umfasst, das axial zwischen dem Niederdruckverdichter (44) und dem Untersetzungsgetriebe (48) angeordnet ist.

2. Gasturbinentriebwerk (20) nach Anspruch 1, wobei das erste Nieder-Läufergruppenstützlager (38A) durch eine statische Triebwerksstruktur (36A) gestützt wird, die axial vor dem Niederdruckverdichter (44) angeordnet ist.

3. Gasturbinentriebwerk (20) nach Anspruch 2, wobei die axial vor dem Niederdruckverdichter (44) angeordnete statische Triebwerksstruktur (36A) ein vorderer Mittelkörper (36A) ist.

4. Gasturbinentriebwerk (20) nach Anspruch 1, 2 oder 3, wobei das zweite Nieder-Läufergruppenstützlager (38B) durch eine statische Triebwerksstruktur (36B) gestützt wird, die axial hinter dem Niederdruckverdichter (44) angeordnet ist.

5. Gasturbinentriebwerk (20) nach Anspruch 4, wobei die axial hinter dem Niederdruckverdichter (44) angeordnete statische Triebwerksstruktur (36B) ein Zwischengehäuse (36B) ist.

6. Gasturbinentriebwerk (20) nach Anspruch 5, wobei das Zwischengehäuse (36B) mindestens teilweise einen Teil eines Kernstromwegs (C) durch das Gasturbinentriebwerk (20) fluidmäßig stromabwärts des Niederdruckverdichters (44) und fluidmäßig stromaufwärts des Hochdruckverdichters (52) definiert.

7. Gasturbinentriebwerk (20) nach Anspruch 6, wobei das Zwischengehäuse (36B) mindestens eine strukturelle Stützstrebe (82) beinhaltet, die den Kernstromweg (C) überspannt.

8. Gasturbinentriebwerk (20) nach einem der vorhergehenden Ansprüche, wobei ein Innenring des ersten Nieder-Läufergruppenstützlagers (38A) dazu konfiguriert ist, sich mit der Nieder-Läufergruppe (30) zu drehen, ein Außenring des ersten Nieder-Läufergruppenstützlagers (38A) an einem oder dem vorderen Mittelkörper (36A) befestigt ist, ein Innenring des zweiten Nieder-Läufergruppenstützlagers (38B) dazu konfiguriert ist, sich mit der Nieder-Läufergruppe (30) zu drehen, und ein Außenring des zweiten Nieder-Läufergruppenstützlagers (38B) an einem oder dem Zwischengehäuse (36B) befestigt ist.

9. Gasturbinentriebwerk (20) nach einem der vorhergehenden Ansprüche, beinhaltend einen Turbinenmittelrahmen (57), der axial zwischen der Hochdruckturbine (54) und der Niederdruckturbine (46) angeordnet ist und ein axial hinteres Ende der Hoch-Läufergruppe (32) stützt.

10. Gasturbinentriebwerk (20) nach Anspruch 9, beinhaltend ein Paar Nieder-Läufergruppenstützlager (38E), die axial hinter der Niederdruckturbine (46) angeordnet sind, wobei die Nieder-Läufergruppe (30) nicht durch den Turbinenmittelrahmen (57) gestützt wird.

11. Gasturbinentriebwerk (20) nach einem der vorhergehenden Ansprüche, wobei ein oder das hintere Ende der Hoch-Läufergruppe (32) durch ein Lagersystem (38C) gestützt wird, das mit einem Diffusorgehäuse in Eingriff steht.

12. Gasturbinentriebwerk (20) nach einem der vorhergehenden Ansprüche, wobei der Fanabschnitt (22) eine Fanantriebswelle (62) in Antriebseingriff mit dem Fan (42) und ein Paar Fanwellenstützlager (38F) beinhaltet, die die Fanantriebswelle (62) relativ zu einem vorderen Mittelkörper (36A) stützen, wobei der Träger (64) in Antriebseingriff mit der Fanantriebswelle (62) steht.

13. Gasturbinentriebwerk (20) nach einem der vorhergehenden Ansprüche, wobei der Niederdruckverdichter (44) mindestens 4 Stufen und nicht mehr als 7 Stufen beinhaltet und der Hochdruckverdichter (52) mehr Stufen als der Niederdruckverdichter beinhaltet.

14. Gasturbinentriebwerk (20) nach einem der vorhergehenden Ansprüche, wobei der Niederdruckverdichter (44) mindestens 5 Stufen und nicht mehr als 7 Stufen beinhaltet und der Hochdruckverdichter (52) mehr Stufen als der Niederdruckverdichter (44) beinhaltet.

## Revendications

1. Moteur à turbine à gaz (20) comprenant :
une section de ventilateur (22) comprenant un ventilateur (42) avec des pales de ventilateur (43), dans lequel ladite section de ventilateur (22) entraîne l'air le long d'un trajet d'écoulement de dérivation (B) dans un conduit de dérivation (13) ;
un réducteur de vitesse (48) en prise d'entraînement avec le ventilateur (42), dans lequel le réducteur de vitesse (48) est un système de pignon satellite (48) ;
un corps inférieur (30) comprenant une turbine basse pression (46) entraînant un compresseur basse pression (44) et entraînant le réducteur de vitesse (48) pour entraîner le ventilateur (42) à une vitesse inférieure à celle de la turbine basse pression (46) ;
un corps supérieur (32) comprenant une turbine haute pression (54) entraînant un compresseur haute pression (52) ; et
un second palier de support de corps inférieur (38B) situé axialement entre le compresseur basse pression (44) et le compresseur haute pression (52),
dans lequel le système de pignon satellite (48) comprend une couronne (70) fixée en rotation par rapport à une structure statique de moteur (36), un planétaire (68) en prise d'entraînement avec une entrée du corps inférieur (30), et un support (64) supportant de multiples engrenages planétaires (66) entourant le planétaire (68), les engrenages planétaires (66) étant supportés pour tourner sur des paliers (72) par rapport au support (64), et dans lequel le système de pignon satellite (48) fournit une sortie à travers le support (64) qui est configuré pour tourner pour entraîner le ventilateur (42),
**caractérisé en ce qu'**il comprend également un premier palier de support de corps inférieur (38A) situé axialement entre le compresseur basse pression (44) et le réducteur de vitesse (48).

2. Moteur à turbine à gaz (20) selon la revendication 1, dans lequel le premier palier de support de corps inférieur (38A) est supporté par une structure statique de moteur (36A) située axialement à l'avant du compresseur basse pression (44).

3. Moteur à turbine à gaz (20) selon la revendication 2, dans lequel la structure statique de moteur (36A) située axialement à l'avant du compresseur basse pression (44) est un corps central avant (36A).

4. Moteur à turbine à gaz (20) selon la revendication 1,2 ou 3, dans lequel le second palier de support de corps inférieur (38B) est supporté par une structure statique de moteur (36B) située axialement à l'arrière du compresseur basse pression (44).

5. Moteur à turbine à gaz (20) selon la revendication 4, dans lequel la structure statique de moteur (36B) située axialement à l'arrière du compresseur basse pression (44) est un carter intermédiaire (36B).

6. Moteur à turbine à gaz (20) selon la revendication 5, dans lequel le carter intermédiaire (36B) définit au moins en partie une portion d'un trajet d'écoulement central (C) à travers le moteur à turbine à gaz (20) en aval fluidiquement du compresseur basse pression (44) et en amont fluidiquement du compresseur haute pression (52).

7. Moteur à turbine à gaz (20) selon la revendication 6, dans lequel le carter intermédiaire (36B) comprend au moins une entretoise de support structurale (82) recouvrant le trajet d'écoulement central (C).

8. Moteur à turbine à gaz (20) selon une quelconque revendication précédente, dans lequel une bague intérieure du premier palier de support de corps inférieur (38A) est configurée pour tourner avec le corps inférieur (30), une bague extérieure du premier palier de support de corps inférieur (38A) est fixée à un corps central avant ou au corps central avant (36A), une bague intérieure du second palier de support de corps inférieur (38B) est configurée pour tourner avec le corps inférieur (30), et une bague extérieure du second palier de support de corps inférieur (38B) est fixée à un carter intermédiaire ou au carter intermédiaire (36B).

9. Moteur à turbine à gaz (20) selon une quelconque revendication précédente, comprenant un cadre de turbine intermédiaire (57) situé axialement entre la turbine haute pression (54) et la turbine basse pression (46) et supportant une extrémité axialement arrière du corps supérieur (32).

10. Moteur à turbine à gaz (20) selon la revendication 9, comprenant une paire de paliers de support de corps inférieur (38E) situés axialement à l'arrière de la turbine basse pression (46), dans lequel le corps inférieur (30) n'est pas supporté par le cadre de turbine intermédiaire (57).

11. Moteur à turbine à gaz (20) selon une quelconque revendication précédente, dans lequel une extrémité arrière ou l'extrémité arrière du corps supérieur (32) est supportée par un système de paliers (38C) en prise avec un carter de diffuseur.

12. Moteur à turbine à gaz (20) selon une quelconque revendication précédente, dans lequel la section de ventilateur (22) comprend un arbre d'entraînement de ventilateur (62) en prise d'entraînement avec le ventilateur (42) et une paire de paliers de support d'arbre de ventilateur (38F) supportant l'arbre d'entraînement de ventilateur (62) par rapport à un corps central avant ou au corps central avant (36A), le support (64) étant en prise d'entraînement avec l'arbre d'entraînement de ventilateur (62).

13. Moteur à turbine à gaz (20) selon une quelconque revendication précédente, dans lequel le compresseur basse pression (44) comprend au moins 4 étages et pas plus de 7 étages et le compresseur haute pression (52) comprend plus d'étages que le compresseur basse pression.

14. Moteur à turbine à gaz (20) selon une quelconque revendication précédente, dans lequel le compresseur basse pression (44) comprend au moins 5 étages et pas plus de 7 étages et le compresseur haute pression (52) comprend plus d'étages que le compresseur basse pression (44).
